Europäisches Patentamt

European Patent Office

Office européen des brevets

(11) Numéro de publication: **0 422 992 B1**

(12) **FASCICULE DE BREVET EUROPEEN**

(45) Date de publication de fascicule du brevet: **19.04.95** (51) Int. Cl.⁶: **B62D 1/19**

(21) Numéro de dépôt: **90402739.8**

(22) Date de dépôt: **03.10.90**

(54) **Barre à aptitude au flambage renforcée et son application, notamment aux directions d'automobiles.**

(30) Priorité: **12.10.89 FR 8913351**

(43) Date de publication de la demande:
**17.04.91 Bulletin 91/16**

(45) Mention de la délivrance du brevet:
**19.04.95 Bulletin 95/16**

(84) Etats contractants désignés:
**DE ES GB IT SE**

(56) Documents cités:
**DD-A- 115 459**
**DE-A- 2 160 849**
**DE-B- 2 212 713**
**FR-A- 2 095 674**
**FR-A- 2 180 189**

**PATENT ABSTRACTS OF JAPAN vol. 10, no. 375 (M-545)(2432), 13 décembre 1986;&& JP - A - 61166769 (HAMANA BUHIN KOGYO) 28.07.1986**

(73) Titulaire: **NACAM**
**Route de Blois**
**F-41100 Vendome (FR)**

(72) Inventeur: **Haldric, Bernard**
**15, rue Charles Lindbergh**
**F-41100 Vendome (FR)**
Inventeur: **Fevre, Laurent**
**La Belle Inutile**
**F-72160 Connerre (FR)**
Inventeur: **Teixeira, Luis**
**58, rue de la Tuillerie,**
**Les Rottes**
**F-41100 Vendome (FR)**

(74) Mandataire: **Phélip, Bruno et al**
**c/o Cabinet Harlé & Phélip**
**21, rue de La Rochefoucauld**
**F-75009 Paris (FR)**

## Description

La présente invention concerne les barres à moment d'inertie particulier et, plus spécialement, des barres auxquelles on confère au moins localement un moment d'inertie déterminé qui renforce leur aptitude au flambage, et l'utilisation de telles barres notamment pour des colonnes de direction d'automobiles.

Comme on le sait, lorsqu'une barre est soumise à un effort de compression axiale, elle peut prendre sous charge une flèche radiale, lorsque cette compression dépasse un certain seuil, c'est-à-dire qu'elle est soumise à un phénomène de flambage ou flambement. Lorsqu'une telle barre est homogène et de section droite constante, la configuration qu'elle tend à prendre est un arc de sinusoïde.

Si, habituellement, on essaie d'éviter ce phénomène de flambage, il existe des cas où, au contraire, on souhaite le renforcer.

Par exemple, un cas où une barre à aptitude au flambage renforcée présente un intérêt industriel notable est celui des colonnes de direction d'automobiles afin d'améliorer les conditions de sécurité de conduite lorsqu'un véhicule automobile est l'objet d'un choc relativement violent à composante axiale importante. Dans une telle situation, d'une part, la déformation du compartiment antérieur du véhicule et l'éventuel recul du bloc moteur tendent à se transmettre à la colonne de direction dont l'arbre et le volant risquent alors de reculer dans l'habitacle en se rapprochant du conducteur et, d'autre part, le conducteur subit un choc en retour qui le projette vers le volant. Si des précautions particulières ne sont pas prises, même lorsque le conducteur est sanglé sur son siège à l'aide d'une ceinture de sécurité, il risque d'être victime de blessures ou contusions graves du fait de la pénétration de la colonne de direction dans l'habitacle et de sa recontre avec le thorax et/ou l'abdomen du conducteur. C'est pourquoi les pouvoirs publics ont édicté des règlements et publié des normes en la matière.

Pour protéger un conducteur contre ce type de dangers, on a déjà proposé des colonnes de direction dont l'arbre, habituellement en plusieurs tronçons réunis par des joints de cardan, est équipé de dispositifs de sécurité particuliers qui sont conçus pour limiter à une valeur maximale la course admissible de recul du volant sous un choc frontal préfixé et prédéterminé et/ou dont le volant est équipé d'absorbeurs d'énergie.

Différents types de dispositifs de sécurité ont déjà été proposés. Tous ces dispositifs visent à faire en sorte que la longueur initiale de la colonne de direction puisse se réduire en cas de chocs dont les efforts axiaux dépassent un seuil prédéterminé. Ces dispositifs font, par exemple, appel à des déformations mécaniques irréversibles ou bien à des coulissements résistants du type de ceux qui peuvent être obtenus à l'aide d'éléments télescopiques tels que des vérins ou d'éléments comprimables tels que des ressorts à boudin, voire à des accouplements désolidarisables.

La fonction essentielle d'un tel dispositif de sécurité est de ne pas transmettre au volant le déplacement du boîtier de direction inséré entre l'arbre de la colonne et la barre de direction et, éventuellement, d'absorber de l'énergie et, ainsi, contribuer à l'amortissement global du choc.

Des solutions de la technique connue de ces différents types sont, par exemple, illustrées par les brevets américains 2.114.663, 3.373.965, 3.396.599, 3.468.182, 3.771.379 et 3.803.938 et par le brevet français 2.095.674, qui divulgue une barre selon le préambule de la revendication 1.

Dans les dispositifs de ce type qui mettent à contribution des frottements et/ou des déformations, il est nécessaire de dépasser un certain seuil à partir duquel le dispositif opère. Ce seuil est, par exemple, déterminé par une goupille qu'il faut d'abord rompre par cisaillement puis, ensuite, pour le reste de la course il suffit d'exercer un effort moindre. Une telle solution utilise, souvent, un nombre de pièces relativement important dont certaines sont, totalement ou partiellement, en matières synthétiques qui sont totalement sensibles aux pointes de température ou aux couples non prévus par les cahiers des charges. Ceci impose la maîtrise d'un grand nombre de paramètres pour garantir une reproductibilité du fonctionnement d'un tel dispositif, on imagine facilement que l'utilisation de pièces nombreuses et délicates grève d'une manière notable les coûts de fabrication et de montage.

LA brevet DE-2.212.713 se rapporte à un dispositif de sécurité, qui comprend un tronçon tubulaire sur lequel sont aménagés de nombreux aplatissements, pour avoir une évolution du tronçon tubulaire qui donne une aptitude au flambage.

Les buts de l'invention sont de créer une barre, de préférence monobloc, de géométrie particulière pour permettre, à la fois, la transmission d'un couple élevé et une déformation longitudinale importante et d'utiliser une telle barre notamment pour des colonnes de direction d'automobiles.

Une barre selon l'invention est telle que lorsqu'elle est soumise à un effort de compression axiale et que cet effort franchit un seuil déterminé, le flambage se déclenche puis se poursuit avec déformation sous un effort d'intensité notablement inférieure.

L'invention a pour objet une barre à aptitude au flambage renforcée, caractérisée en ce qu'elle comprend entre ses extrémités une zone intermédiaire à section droite qui est de contour approximativement en "pelote de laine" ou "en noeud papillon" ou bien même en forme du symbole mathématique "infini", qui est faite de deux ailes latérales réunies par une âme centrale et qui est inscrite dans un rectangle dont la longueur est au moins égale au double de la largeur et dont le rapport des modules d'inertie relativement au centre et au grand axe de ce rectangle, respectivement, est au moins égal à quatre.

L'invention a aussi pour objet l'application d'une telle barre à la confection d'une colonne de direction d'automobiles dont elle constitue un arbre.

D'autres caractéristiques de l'invention ressortiront de la lecture de la description qui suit et de l'examen du dessin annexé, donné seulement à titre d'exemple, où :
- la Figure 1 est une vue en élévation d'un mode de réalisation d'une barre selon l'invention appliquée à une direction d'automobile, à l'état normal avant flambage;
- la Figure 2 est une vue de la barre de la Figure 1 représentée dans la position qu'elle occupe à la suite d'une déformation dûe à un effort de compression axiale qui a déclenché son flambage;
- la Figure 3 est une section droite de la zone intermédiaire d'un mode de réalisation d'une barre selon l'invention montrant sa configuration particulière;
- la Figure 4 est un graphique illustrant le comportement d'un tronçon de colonne de direction fait d'une barre selon l'invention; en abscisses sont portées les valeurs de la course ou raccourcissement de la longueur initiale de la barre et en ordonnées sont portées les valeurs des efforts de compression axiale provoquant le flambage et la déformation;
- la Figure 5 est un graphique illustrant le comportement théorique auquel doit satisfaire un autre mode de réalisation d'un tronçon de colonne de direction qui le rend apte à satisfaire aux conditions de sécurité; en abscisses sont portées les valeurs de la course ou raccourcissement de la longueur initiale de la barre et en ordonnées sont portées les valeurs des efforts de compression axiale provoquant le flambage et la déformation ;
- la Figure 6 est une graphique analogue à celui de la Figure 5 du comportement réel d'une barre selon l'invention utilisée pour un tronçon de colonne de direction suivant l'invention;
- la Figure 7 est une représentation d'un autre mode de réalisation d'une barre selon l'invention où en A est illustrée une vue de dessus partielle, en B est illustrée une vue partielle analogue à celle de la Figure 1 et en C sont illustrées diverses sections droites repérées par les chiffres I à V correspondant aux plans portant les mêmes repères sur les vues A et B;
- la Figure 8 et ses vues A, B et C, analogues à celles correspondantes de la Figure 7, concernent une variante d'exécution;
- les Figures 9A et 9B sont des sections, de détail, analogues à celles portant les repères I sur les vues 7C et 8C, d'autres variantes d'exécution, et;
- les Figures 10 et 11 sont des sections schématiques d'outillages permettant de produire des barres selon l'invention.

Le travail des matériaux en barre, d'une part, et les colonnes de direction d'automobiles, d'autre part, étant bien connus dans la technique, on ne décrira par la suite que ce qui concerne directement ou indirectement l'invention. Pour le surplus, le spécialiste de la technique considérée puisera dans les solutions courantes classiques à sa disposition pour faire face aux problèmes particuliers auxquels il est confronté.

Un même numéro de référence désigne toujours un élément homologue quel que soit le mode de réalisation.

Dans ce qui suit, on décrira plus spécialement une barre selon l'invention dans son application particulière aux colonnes de direction d'automobiles. Il est clair que l'invention n'est pas limitée à cette application particulière d'une telle barre à aptitude au flambage renforcée selon l'invention.

Comme on le sait, une colonne de direction de véhicule d'automobile comprend, habituellement, entre autres, un volant dans l'habitacle et un boîtier de direction dans le compartiment antérieur qui sont reliés l'un à l'autre par un arbre fait, souvent, de tronçons différents réunis, habituellement, par des joints de cardan. C'est un de ces tronçons qui est constitué d'une barre 10 selon l'invention, qui porte à chacune de ses extrémités 11 un joint de cardan 20. Ces joints de cardan 20 comprennent, comme il est classique, un moyeu 21, des mâchoires 22 et un croisillon 23 reliant les mâchoires ; tout ceci est courant et ne fait pas partie de l'invention.

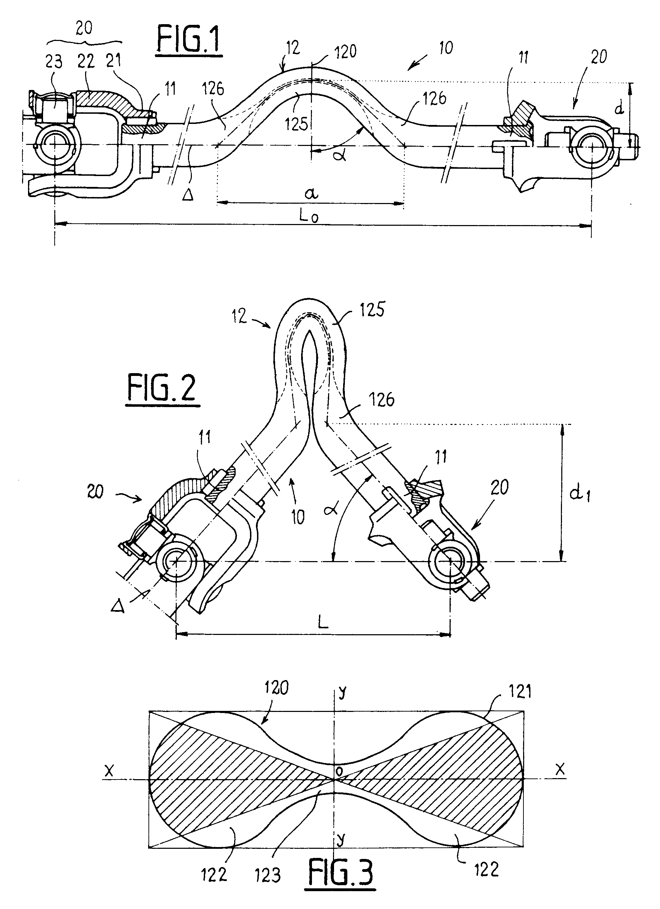

La barre 10 cylindrique, d'axe longitudinal $\Delta$ - (delta), a un rayon R ou diamètre D. Une telle barre a une longueur initiale $L_o$ (Figure 1) et une longueur L après avoir subi un phénomène de flambage (Figure 2).

Entre les extrémités 11, une telle barre 10 présente une zone intermédiaire 12. Comme on le voit, en particulier sur la Figure 3, cette zone intermédiaire présente une section droite 120 inscrite dans un rectangle dont le grand axe est désigné par X-X et le petit axe par Y-Y, ces deux axes se coupant en un centre O. Comme on peut l'observer notamment sur la Figure 3, cette section droite 120 est délimitée par un contour 121 de configuration particulière, approximativement en "pelote de laine" ou en "noeud papillon" voire en forme du symbole mathématique "infini". Cette section droite présente deux ailes latérales 122 réunies par une âme centrale 123. De préférence, le contour de cette section droite 120 présente un centre de symétrie confondu avec le centre O du rectangle dans lequel ce contour est inscrit.

Selon l'invention, cette section droite est telle que sa configuration en "pelote de laine" ou "noeud papillon" voire en forme du symbole mathématique "infini", est inscrite dans un rectangle dont la longueur est au moins égale au double de la largeur et dont le rapport des modules d'inertie relativement au centre O et relativement au grand axe X-X de ce rectangle, respectivement, est au moins égal à quatre. De préférence, ce contour délimite une surface dont 80% au moins de celle-ci sont compris entre les diagonales et les largeurs de ce rectangle. Ceci est illustré par des hâchures sur la Figure 3.

On fait en sorte que la majeure partie de cette surface délimitée par le contour 121 soit localisée dans les ailes latérales 122, le reste de cette surface étant logé dans l'âme centrale 123 qui est réduite au minimum minimorum nécessaire à la fabrication. En principe, si cela était matériellement possible, cette âme centrale 123 serait constituée seulement par le centre O.

Selon un mode de réalisation particulier (voir les Figures 1 et 2), cette zone intermédiaire 12 est désaxée d'une valeur déterminée $\underline{d}$ par rapport à l'axe longitudinal $\Delta$ (delta). Par exemple, cette zone intermédiaire est courbe et se présente à la manière d'un cintre 125, en oméga ou en lyre, réuni à chacun de ses bouts par un coude 126 en direction des extrémités 11 de la barre. Il est clair que cette configuration en omega ou en lyre n'est pas limitative et que d'autres sont utilisables. L'amplitude de cette zone intermédiaire 12 courbe, mesurée entre ces coudes 126, est égale à $\underline{a}$ et est désaxée d'une quantité $\underline{d}$ mesurée entre l'axe $\Delta$ (delta) et la position de la fibre neutre au point culminant du cintre 125, comme dessiné notamment sur la Figure 1.

Pour caractériser l'aptitude d'une barre à transmettre un couple important tout en cédant facilement sous une charge axiale, on utilise le rapport

$$K = (I_o/r)/(I_{xx}/v)$$

où $I_o$ désigne le moment d'inertie polaire par rapport au centre 0

$I_{xx}$ désigne le moment d'inertie par rapport à l'axe X-X

r désigne la distance du point le plus éloigné du centre 0

v désigne la distance du point le plus éloigné de l'axe X-X

$I_o/r$ désigne le module d'inertie polaire de centre O

$I_{xx}/v$ désigne le module d'inertie par rapport à l'axe X-X.

Alors qu'avec des barres rondes traditionnelles un tel rapport est égal à deux car on a $I_0 = D^4/32$, $I_{xx} = D^4/64$ et $r = v = D/2$, avec une barre selon l'invention il est possible d'obtenir une valeur de l'ordre de quatre et qui peut même atteindre voire dépasser dix.

Pour obtenir une valeur de ce rapport de l'ordre de dix ou onze, on inscrit la section droite 120 de la zone intermédiaire 12 dans un rectangle dont la longueur est de l'ordre du quadruple de sa largeur.

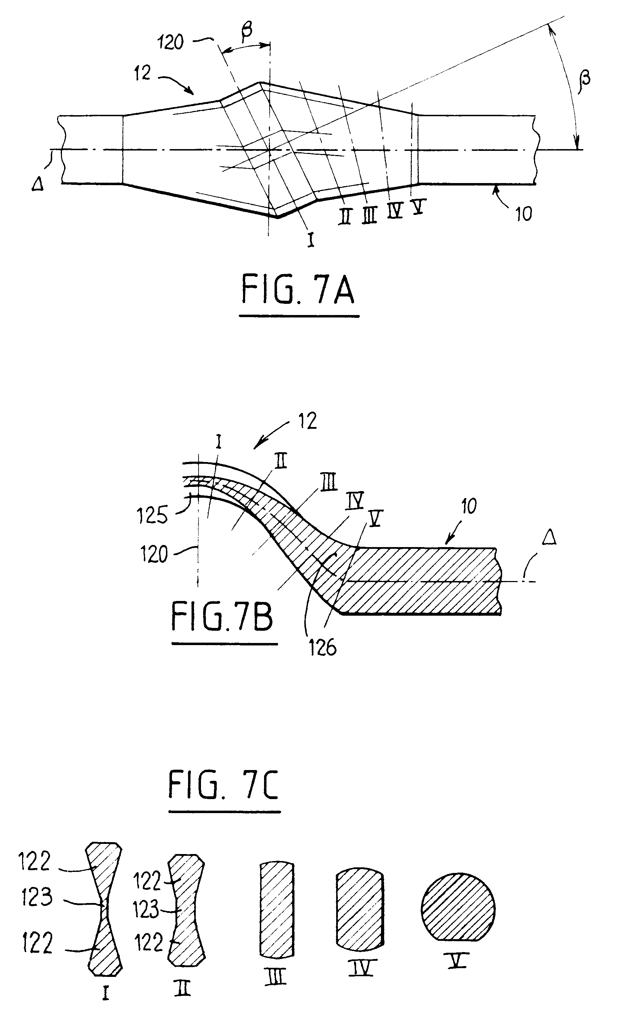

La section est comprise entre les diagonales et les largeurs du rectangle. Pour des raisons de fabrication, on donne à l'âme une épaisseur minimale non nulle. On peut aussi pour faciliter la fabrication et diminuer l'encombrement en rotation par exemple chanfreiner les arêtes extérieures de la zone intermédiaire, notamment (voir par exemple Figure 7C). Il est clair qu'on peut aussi opérer autrement sans enlèvement de matière. Il est manifeste que le fait de "casser" ou "abattre" ainsi les arêtes en les chanfreinant modifie quelque peu la largeur initiale du rectangle dans lequel la section droite de la zone intermédiaire est inscrite mais une telle modification, en pratique mineure, est sans conséquence notable sur le comportement réel d'une barre selon l'invention.

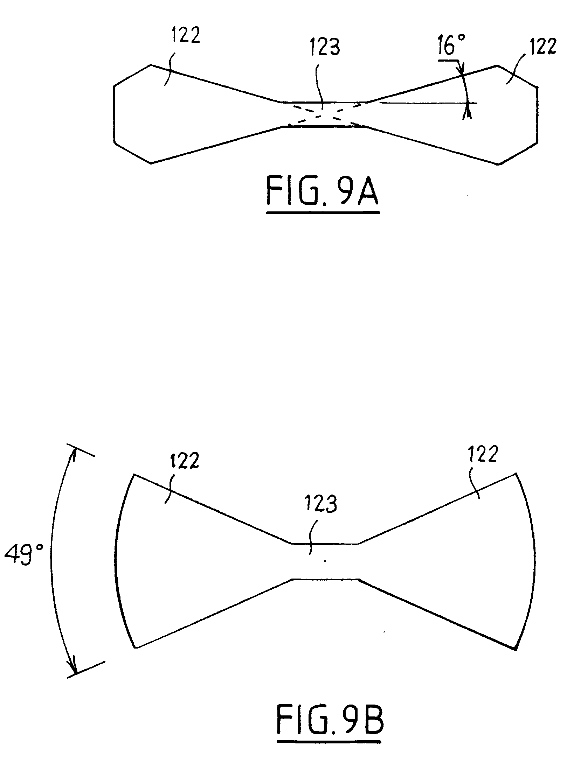

Pour obtenir une valeur de ce rapport qui dépasse dix et peut même atteindre onze, on inscrit la section droite 120 de la zone intermédiaire 12 dans un rectangle dont la longueur est au moins de l'ordre du quadruple de sa largeur et on donne à l'âme centrale 123 par exemple une configuration approximativement selon un rectangle allongé dans la même direction que celui dans lequel la section droite est inscrite. De préférence, la longueur propre du rectangle allongé de l'âme centrale est de l'ordre du triple de sa largeur propre, et les ailes latérales 122 se raccordent à la longueur du rectangle allongé de l'âme centrale 123 avec une inclinaison de l'ordre de 15° environ. Dans un tel mode de réalisation, la longueur du rectangle dans lequel la section droite 120 est inscrite est de l'ordre du quintuple de la longueur propre du rectangle allongé de l'âme centrale 123 (voir Figure 9A).

Il est clair que la configuration de cette âme peut avoir une autre géométrie. Par exemple, comme illustré sur la Figure 3, les grands côtés peuvent être incurvés et leur concavité tournée vers l'extérieure ou bien encore, les sommets O des triangles hâchurés de cette figure peuvent s'interpénétrer par translation l'un vers l'autre suivant l'axe X-X afin d'obtenir une âme avec une configuration en losange ou approximativement telle.

En choisissant l'importance du désaxage $d$, on peut fixer l'effort nécessaire pour provoquer le flambement de la barre.

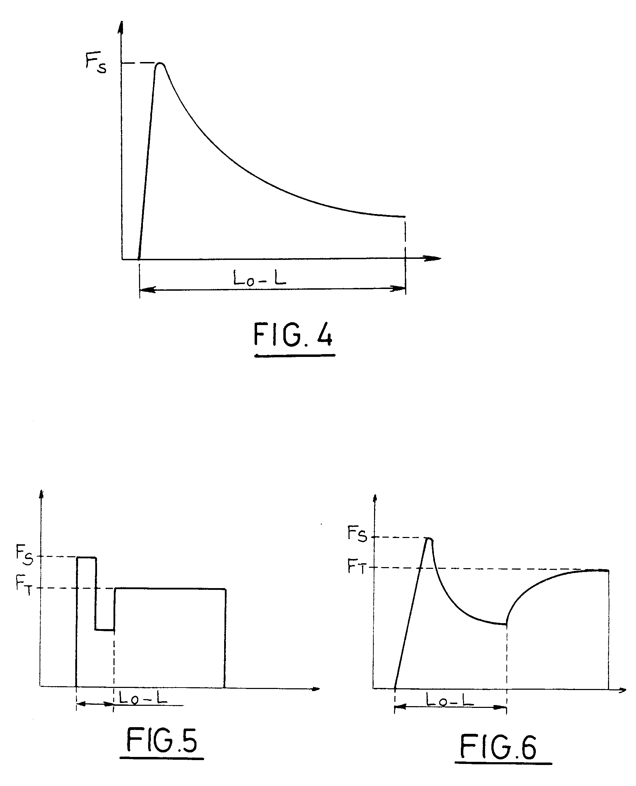

Comme indiqué, une barre selon l'invention voit son flambage se déclencher lorsqu'elle est soumise à un effort de compression axiale supérieur à une valeur déterminée $F_s$ qui ne dépend que du module d'inertie de la zone intermédiaire 12 et du désaxage $d$ de la matière de celle-ci. Une fois ce seuil $F_s$ franchi, l'effort qui provoque la déformation de la barre décroît rapidement pendant toute la partie $b$ ($b = Lo - L$) de la course (voir Figures 4, 5 et 6). Cette course partielle $b$ est uniquement fonction de l'amplitude $a$ de la zone intermédiaire 12 courbe. Le choix de cette distance $a$ permet donc d'ajuster par construction la course. Au cours du flambage, les deux coudes 126 arrivent en contact et l'amplitude $a$ initiale est nulle, comme illustré sur la Figure 2.

L'effort pour racourcir encore davantage la barre 10 augmente alors et prend une valeur $F_t$ inférieure à $F_s$ qui ne dépend que de l'inertie des sections des coudes 126 des extrémités 11 de la barre 10 et de la distance résiduelle $d_1$ séparant les deux extrémités 11 de la barre 10 de ses coudes 126 (voir Figures 5 et 6). On observera que cette distance $d_l$ n'est fonction que de l'amplitude $a$, du désaxage $d$ et de la longueur initiale $L_o$ de la barre. En effet, on constate immédiatement que $d_1$ est égal à $(L-a)/2.\cos\alpha$ (alpha) avec $\alpha$(alpha) = arctg $a/2d$. La valeur complète de la course de raccourcissement est obtenue lorsque les deux extrémités 11 se touchent c'est-à-dire lorsque L est minimale.

On voit donc que si on se fixe la longueur initiale $L_o$ de la barre, pour chaque "quadruplet" de valeurs $F_s$, $F_t$, $(a)$ et $L_o$ correspond une seule courbe de compression.

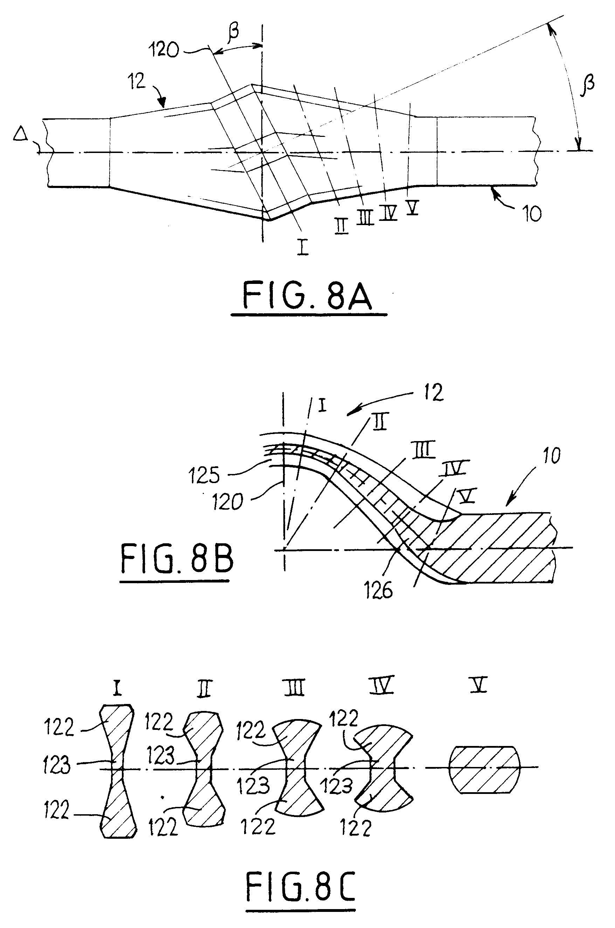

On se reportera maintenant aux diverses vues de la Figure 7 ou de la Figure 8 où est illustré un autre mode de réalisation de l'invention.

Comme on peut l'y voir, notamment d'après la Figure 7B ou 8B, ce mode de réalisation est, pour ses traits principaux, analogue à celui dessiné sur la Figure 1. Toutefois, en observant attentivement la Figure 7A ou 8A, il y a lieu de remarquer que la zone intermédiaire 12 est basculée d'un angle $\beta$-(bêta), déterminé, par rapport à l'axe longitudinal $\Delta$(delta).

Un tel basculement de la zone intermédiaire d'une barre selon l'invention permet d'obtenir une course de déformation lors d'un flambage qui est notablement allongée par rapport à celle que procure le mode de réalisation de la Figure 1. En effet, en fin de déformation, les coudes 126 s' évitent", "s'esquivent" alors et dans certains cas, les mâchoires des joints de cardan 20 peuvent ne pas se rencontrer. On comprend donc que dans de telles circonstances l'amplitude de cette course de déformation peut alors être supérieure à la longueur initiale $L_o$ de la barre puisque les extrémités 11 se "croisent" en quelque sorte.

Pour obtenir une telle barre selon l'invention, on donne à la zone intermédiaire 12 une section droite évolutive.

Comme on peut le remarquer pour les modes de réalisation des Fig 7C et 8C, cette section droite varie progressivement du contour 121 approximativement en pelote de laine, noeud papillon ou symbole "infini" à celui de la barre. Ceci ressort clairement des illustrations des vues A, B et C de la Figure 7 et de la Figure 8.

Les Figures 9A et 9B illustrent des détails de variantes d'exécution. Ces vues représentent des sections droites analogues à celles illustrées pour les sections portant le repère I sur les vues 7C et 8C.

La fabrication d'une barre selon l'invention est faite, par exemple et de préférence, par déformation plastique en une seule opération qui permet d'obtenir de bonnes garanties de reproductibilité et donc une persistance de la stabilité de la courbe de compression au cours du temps.

Pour fabriquer une barre selon l'invention, on utilise, par exemple, on outil 30 fait d'un poinçon 31 et d'une matrice 32 qui porte, chacun, des empreintes en creux et en relief correspondant notamment au profil du contour 121 de la section droite 120 de la zone intermédiaire 12 à obtenir.

L'outil particulier pour la mise en oeuvre de l'invention permet d'obtenir le profil en lyre ou omega de la barre et la section particulière 120 en une seule opération. La particularité réside dans le fait que l'allongement de la barre en question pour former le oméga ou la lyre est alimenté par le rétrécissement par rapport à la section circulaire originale de la section 120. Seule la section 120, sa distance d (et son inclinaison éventuelle dont il sera question ultérieurement) sont caractéristiques de l'invention ainsi que le cas échéant les sections droites des coudes 126. Le cintre 125 qui peut être un arc de cercle, peut aussi être autre par exemple approximativement en V ou en U (inversé sur le dessin) plus ou moins évasé, plus ou moins profond, plus ou moins anguleux, mais est lié au mode de fabrication.

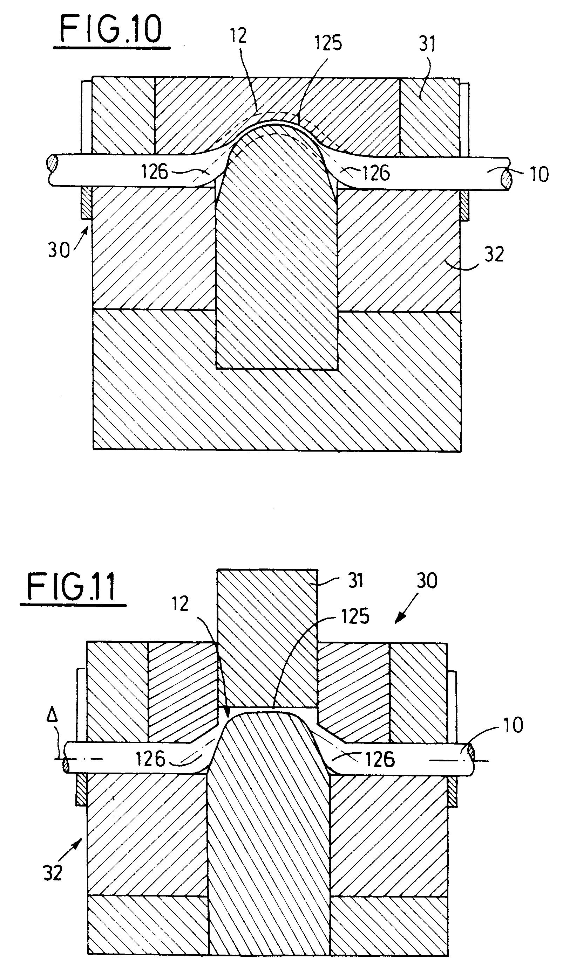

Un tel outil est, par exemple, illustré schématiquement sur la Figure 10. Comme on peut le voir, si on utilise une barre de diamètre D, la longueur de l'outil qui permet d'obtenir la zone intermédiaire 12 courbe est de l'ordre de sept fois ce diamètre.

Le cintre 125 se développe suivant un quart de cercle, environ, prolongé par une partie rectiligne de chaque côté égale à environ la moitié de ce diamètre, avant de se poursuivre par les coudes 126 qui présentent une face, côté concave, inclinée sur l'axe Δ (delta) d'environ 15°. Ceci ressort clairement de la Figure 10.

La Figure 11 illustre un autre mode de réalisation d'un tel outil.

Il va de soi que d'autres outils et/ou d'autres techniques sont aussi utilisables pour fabriquer une barre selon l'invention.

Si nécessaire, des traitements thermiques localisés, par exemple de la zone intermédiaire, permettent d'ajuster les propriétés relatives en flexion/torsion de la barre selon l'invention.

On observera qu'il est aussi possible d'obtenir des courbes de déformation plus complexes en utilisant une section droite 120 non symétrique et des sections pour les coudes 126 différentes, centrées ou non.

Pour obtenir la barre selon l'invention, on peut partir de produits métalliques pleins.

On saisit immédiatement tout l'intérêt de l'invention puisque grâce à une seule barre de configuration très particulière, il est possible d'obtenir pratiquement avec une seule opération, un élément dont les caractéristiques de transmission d'un couple et de flambage sous compression axiale sont facilement maîtrisées sans qu'il soit nécessaire d'utiliser des pièces nombreuses et complexes dont les propriétés et l'assemblage sont difficiles à maîtriser.

**Revendications**

1. Barre ayant une section droite pleine, et dont l'évolution de la section donne une aptitude au flambage renforcée, caractérisée en ce que:
   - elle comprend une zone intermédiaire (12) entre ses extrémités (11);
   - la zone intermédiaire (12) est courbe en forme de lyre ou de oméga et présente un cintre (125) médian réuni en direction des extrémités (11) de la barre par des coudes (126);
   - la section droite (120) pleine de la zone intermédiaire (12) est de contour (121) approximativement en "pelote de laine" ou "noeud papillon" ou en forme du symbole mathématique "infini", qui est faite de deux ailes (122) latérales reliées par une âme (123) centrale et qui est inscrite dans un rectangle dont la longueur est au moins égale au double de la largeur et dont le rapport des modules d'inertie relativement au centre (0) et au grand axe (X-X) de ce rectangle, respectivement, est au moins égal à quatre;
   - la zone intermédiaire (12) est désaxée d'une valeur déterminée (d) par rapport à l'axe longitudinal (Δ delta) de la barre.

2. Barre selon la revendication 1, caractérisée en ce que ce contour (121) délimite une surface dont la majeure partie est constituée par les ailes latérales (122), l'âme centrale (123) étant réduite au minimum minomorum nécessaire à la fabrication.

3. Barre selon l'une quelconque des revendications 1 et 2, caractérisée en ce que le contour (121) délimite une surface dont au moins 80% environ sont compris entre les diagonales et les largeurs de ce rectangle.

4. Barre selon l'une quelconque des revendications 1 à 3, caractérisée en ce que la longueur de ce rectangle est de l'ordre du quadruple de sa largeur, cette âme (123) se présente approximativement à la manière d'un rectangle allongé dans la même direction que le rectangle dans lequel est inscrite cette section droite (120) et dont la longueur propre est de l'ordre du triple de sa largeur propre et où la longueur du rectangle dans lequel est inscrite cette section droite (120) est de l'ordre du quintuple de celle propre au rectangle allongé de cette âme (123), de manière que le rapport de ces modules d'inertie soit supérieur à dix.

5. Barre selon l'une quelconque des revendications 1 à 4, caractérisée en ce que cette section droite (120) présente un centre de symétrie confondu avec celui 0 du rectangle dans lequel elle est inscrite.

6. Barre selon l'une quelconque des revendications 1 à 5, caractérisée en ce que cette zone intermédiaire (12) est basculée d'un angle déterminé (β bêta) par rapport à cet axe longitudinal (Δ delta).

7. Barre selon l'une quelconque des revendications 1 à 6, caractérisée en ce que la section droite (120) de la zone intermédiaire (12) évolue d'un contour (121) approximativement en pelote de laine, noeud papillon ou symbole "infini" à un contour approximativement de celui des extrémités (11) lorsqu'on se déplace de cette zone intermédiaire (12) vers ces extrémités (11).

8. Barre selon l'une quelconque des revendications 1 à 7, caractérisée en ce que les arêtes extérieures de la zone intermédiaire (12) sont chanfreinées.

9.   Barre selon l'une quelconque des revendications 1 à 8, caractérisée en ce qu'elle est obtenue par déformation plastique d'une barre métallique.

10.  Barre selon la revendication 9, caractérisée en ce qu'elle est soumise à un traitement thermique localisé afin d'ajuster ses propriétés relatives en flexion/torsion.

11.  Application d'une barre conforme à l'une quelconque des revendications 1 à 10 à la confection d'une colonne de direction d'automobile dont elle constitue un arbre.

## Claims

1.   Bar with a full straight section, and whose evolution provides an enhanced buckling capacity, characterised in that :
     - it comprises an intermediate zone (12) between its ends (11);
     - the intermediate zone (12) is bent in the shape of lyre or of an omega and exhibits a middle arch (125) brought together towards the ends (11) of the bar using elbows (126);
     - the full straight section (120) of the intermediate zone (12) shows a contour (121) more or less like that of a "ball of wool" or" bow tie" or like the mathematical symbol "infinity", which comprises two lateral lobes (122) bound by a central core (123), inscribed within a rectangle whose length is at least equal to the double width and in which the ratio of the inertia moduli relative to the centre (0) and to the great axis (X-X) of this rectangle, respectively, is equal to at least four;
     - the axis of the intermediate zone (12) is offset by a preset value (d) with respect to the longitudinal axis ( . delta) of the bar.

2.   Bar according to claim 1, characterised in that this contour (121) defines a surface whose greater portion is made of the lateral lobes (122), whereby the central core (123) is reduced to the minimum minorum necessary to manufacture.

3.   Bar according to either one of claims 1 and 2, characterised in that the contour (121) defines a surface whose at least 80% are comprised between the diagonals and the widths of this rectangle.

4.   Bar according to any one of claims 1 to 3, characterised in that the length of this rectangle is more or less four times its width, whereby this core (123) exhibits approximately the shape of a rectangle elongated in the same direction as the rectangle in which this straight section (120) is inscribed and whose own length is more or less three times its own width and whereas the length of the rectangle in which this straight section (120) is inscribed is more or less five times that own of the elongated rectangle of this core (123), so that the ratio of these inertia moduli is more than ten.

5.   Bar according to any one of claims 1 to 4, characterised in that this straight section (120) shows a centre of symmetry overlapping the centre 0 of the rectangle in which it is inscribed.

6.   Bar according to any one of claims 1 to 5, characterised in that this intermediate zone (12) is tilted by a preset angle ( . beta) with respect to this longitudinal axis ( . delta).

7.   Bar according to any one of claims 1 to 6, characterised in that the straight section (120) of the intermediate zone (12) evolves with a contour (121) approximately like that of a ball of wool, a bow tie or a mathematical symbol "infinity" at a contour approximately of that of the ends (11) when one moves from this intermediate zone (12) towards these ends (11).

8.   Bar according to any one of claims 1 to 7, characterised in that the external edges of the intermediate zone (12) are chamfered.

9.   Bar according to any one of claims 1 to 8, characterised in that it can be obtained by plastic deformation of a metal bar.

10.  Bar according to claim 9, characterised in that it is subject to localised thermal treatment in order to adjust its relative deflection/torsion properties.

11.  Application of a bar complying with any one of claims 1 to 10 to the construction of a vehicle steering column of which it forms a shaft.

## Patentansprüche

1.   Stange aus Vollmaterial, deren Querschnitt der Stange ein erhöhtes Knickvermögen mitteilt, **dadurch gekennzeichnet,**

- daß die Stange zwischen ihren Enden (11) einen Zwischenbereich (12) aufweist,
- daß der Zwischenbereich (12) in Form einer Lyra oder eines Omega gebogen ist und einen mittigen Bogen (125) ausbildet, an den sich in Richtung auf die Enden (11) der Stange Abbiegungen (126) anschließen,
- daß der Querschnitt (120) des Vollmaterials des Zwischenbereichs (12) eine Kontur (121) hat, die etwa einem Fadenknäuel, einem Schmetterlingsknoten oder dem mathematischen Symbol für "unendlich" entspricht und zwei seitliche Flügel (122) hat, die über ein Mittelteil (123) miteinander verbunden sind, wobei der Querschnitt in ein Rechteck eingeschrieben werden kann, dessen Länge wenigstens gleich seiner doppelten Breite ist, wobei das Verhältnis der Trägheitsmodule relativ zum Zentrum (O) bzw. zur großen Achse (X-X) des Rechtecks wenigstens gleich vier ist, und
- daß der Zwischenbereich (12) in Bezug auf die Längsachse (delta) der Stange um einen bestimmten Wert (d) verschoben ist.

2.  Stange nach Anspruch 1,
    **dadurch gekennzeichnet,**
    daß die Kontur (121) eine Oberfläche begrenzt, deren größerer Teil von den seitlichen Flügeln (122) gebildet wird, wobei der Mittelteil (123) auf das für die Herstellung allernotwendigste reduziert ist.

3.  Stange nach Anspruch 1 oder 2,
    **dadurch gekennzeichnet,**
    daß die Kontur (121) eine Fläche begrenzt, von der wenigstens etwa 80% zwischen den Diagonalen des Rechtecks und den Breitseiten des Rechtecks enthalten sind.

4.  Stange nach einem der Patentansprüche 1 - 3,
    **dadurch gekennzeichnet,**
    - daß das Rechteck eine Länge hat, die etwa das Vierfache der Breite des Rechtecks beträgt, und
    - daß der Mittelteil (123) etwa die Gestalt eines länglichen Rechtecks hat, das sich in der gleichen Richtung erstreckt wie dasjenige Rechteck, in welches der Querschnitt (120) eingeschrieben ist, wobei dessen eigentliche Länge etwa das Dreifache von dessen eigentlicher Breite beträgt und wobei die Länge des Rechtecks, in das der Querschnitt (120) eingeschrieben ist, etwa das Fünffache desjenigen Betrags des länglichen Rechtecks dieses Mittelteils (123) beträgt, derart, daß das Verhältnis der Trägheitsmodule größer ist als zehn.

5.  Stange nach einem der Patentansprüche 1 - 4,
    **dadurch gekennzeichnet,**
    daß der Querschnitt (120) ein Symmetriezentrum hat, das mit demjenigen (O) des Rechtecks zusammenfällt, in das der Querschnitt eingeschrieben ist.

6.  Stange nach einem der Patentansprüche 1- 5,
    **dadurch gekennzeichnet,**
    daß der Zwischenbereich (12) um einen bestimmten Winkel (beta) in Bezug auf die Längsachse (delta) gekippt ist.

7.  Stange nach einem der Patentansprüche 1 - 6,
    **dadurch gekennzeichnet,**
    daß der Querschnitt (120) des Zwischenbereichs (12) eine Kontur (121) hat, die etwa einem Fadenknäuel, einem Schmetterlingsknoten oder dem mathematischen Symbol für "unendlich" entspricht und von dieser Kontur etwa in diejenige Kontur übergeht, die die Enden (11) haben, wenn man die Entwicklung der Querschnitte vom Zwischenbereich (12) zu den Enden (11) betrachtet.

8.  Stange nach einem der Patentansprüche 1 - 7,
    **dadurch gekennzeichnet,**
    daß die äußeren Kanten des Zwischenbereichs (12) abgefast sind.

9.  Stange nach einem der Patentansprüche 1 - 8,
    **dadurch gekennzeichnet,**
    daß sie durch plastische Verformung einer Metallstange erhalten worden ist.

10.  Stange nach Anspruch 9,
    **dadurch gekennzeichnet,**
    daß sie einer örtlichen thermischen Behandlung unterworfen worden ist, um ihre Eigenschaften in Bezug auf die Biegung/Torsion entsprechend anzupassen.

11.  Verwendung einer Stange nach einem der Patentansprüche 1 - 10 zur Herstellung einer Lenksäule eines Kraftfahrzeugs, deren Welle die Stange ausbildet.

FIG.1

FIG.2

FIG.3

FIG. 4

FIG.5

FIG.6

FIG. 7A

FIG.7B

FIG. 7C

FIG. 8A

FIG. 8B

FIG. 8C

122    123    16°    122

<u>FIG. 9A</u>

49°    122    123    122

<u>FIG. 9B</u>

FIG.10

12  125  31

126  126  10

30  32

FIG.11

31  30

12  125

Δ

126  126  10

32